# FASCICULE DE BREVET EUROPEEN

(11) **EP 4 510 610 B1**
(45) Date de publication et mention de la délivrance du brevet: **24.09.2025**
(21) Numéro de dépôt: 24194027.9
(22) Date de dépôt: 12.08.2024
(51) Int. Cl.: H04Q 9/00, G01D 4/00

(54) **PROCÉDÉ ET SYSTÈME DE COLLECTE DE DONNÉES DE CONSOMMATIONS MESURÉES PAR DES COMPTEURS INTELLIGENTS**
VERFAHREN UND SYSTEM ZUR SAMMLUNG VON VERBRAUCHSDATEN, DIE VON INTELLIGENTEN ZÄHLERN GEMESSENEN WERDEN
METHOD AND SYSTEM FOR COLLECTING CONSUMPTION DATA MEASURED BY SMART METERS

(30) Priorité: 17.08.2023 FR 2308748
(43) Date de publication de la demande: 19.02.2025
(73) Titulaire: SAGEMCOM ENERGY & TELECOM SAS, 92270 Bois-Colombes (FR)
(72) Inventeur: TEBOULLE, Henri, 92270 BOIS-COLOMBES (FR); ROTER, Ziv, 92270 BOIS-COLOMBES (FR)
(74) Mandataire: Cabinet Le Guen Maillet

(56) Documents cités:
- EP-A1- 3 122 061
- EP-A1- 3 598 801
- EP-A1- 4 064 146
- EP-A1- 4 207 675

## Description

### DOMAINE TECHNIQUE

Au moins un mode de réalisation concerne un procédé et un système de collecte de données de consommation mesurée par un compteur intelligent. Le système en question est adapté pour effectuer une collecte de telles données en provenance de plusieurs compteurs intelligents, que ce soit pour des mesures de consommation de fluide (tel que gaz, eau, chaleur, essence) ou des mesures de consommation électrique.

### ETAT DE LA TECHNIQUE ANTERIEURE

Il est connu des compteurs intelligents, de type compteurs électriques (compteurs de consommations électriques) ou compteurs de fluides (compteurs de consommation de fluides), qui comprennent des interfaces de communication permettant à un système de gestion automatisée d'effectuer une collecte à distance de données de consommation. Par exemple, des compteurs électriques intelligents comportent une interface de communication de type Courants Porteurs en Ligne CPL (ou PLC, pour « Powerline Communications » en anglais). Des données de consommation peuvent ainsi être transmises, à intervalles réguliers ou non, jusqu'à un système d'information IS (« Information system » en anglais) les traitant de manière centralisée.

Les données de consommation collectées doivent être exemptes d'erreurs pour éviter d'éventuels litiges liés à une contestation de leurs valeurs. Des erreurs peuvent provenir notamment d'une altération lors de leur transmission. En cas de litige sur la valeur d'une donnée de consommation entre un client et un fournisseur de service, une solution consiste pour le fournisseur de service à envoyer chez le client un opérateur pour effectuer une lecture directe sur un afficheur du compteur de la donnée de consommation. Une telle solution n'est pas satisfaisante dans la mesure où elle nécessite d'une part que le compteur soit équipé d'un afficheur et d'autre part que l'opérateur se déplace au domicile du client, ce qui est fastidieux et coûteux.

Il est alors souhaitable de fournir une solution qui permette de certifier que les données de consommation collectées à distance depuis un compteur intelligent par un système d'information proviennent bien dudit compteur intelligent. Il est notamment souhaitable de fournir une solution qui permette de faire aisément évoluer une infrastructure de collecte existante (*i.e.,* déjà déployée sur le terrain) tout en assurant une non-répudiation des données de consommation collectées.

Le document EP 4 207 675 A1 décrit un système de transmission de données de consommation d'eau à un système de gestion de données de compteur, sous forme d'empreinte digitale cryptée, comprenant un identifiant de compteur, un CRC, des données de consommation et une signature.

### EXPOSE DE L'INVENTION

A cet effet, il proposé un procédé de collecte de données de consommation par un système d'information dans un système de gestion automatisée, le système de gestion automatisée comportant un concentrateur de données auquel le système d'information délègue la collecte de données et un réseau de communication via lequel le concentrateur de données collecte des données de consommation formatées selon un protocole de communication P2 auprès de compteurs intelligents d'un premier type, dits compteurs intelligents primaires, le système de gestion automatisée comportant en outre au moins une passerelle connectée au réseau de communication, chaque passerelle servant de relais pour collecter des données de consommation formatées selon un protocole de communication P1 auprès de compteurs intelligents d'un deuxième type, dits compteurs intelligents secondaires, le procédé étant tel que :
- chaque compteur intelligent secondaire transmet ses données de consommation accompagnées d'une empreinte dérivée desdites données de consommation, dans des données métier formatées selon le protocole de communication P1 et signées en utilisant une clef privée de chiffrement asymétrique ;
- chaque passerelle relaie, au concentrateur de données via le réseau de communication, les données signées par un dit compteur intelligent secondaire en les encapsulant dans des données métier formatées selon le protocole de communication P2 ;
- le concentrateur de données relaie au système d'information les données métier formatées selon le protocole de communication P2 qui sont reçues via le réseau de communication ; et lorsque les données métier formatées selon le protocole de communication P2 incluent des données métier formatées selon le protocole de communication P1, le système d'information :
- déchiffre les données métier formatées selon le protocole de communication P1 en utilisant une clef publique de chiffrement asymétrique correspondant au compteur intelligent secondaire duquel les données de consommation sont supposées être collectées,
- génère une empreinte de référence à partir des données de consommation reçues dans les données métier déchiffrées et d'informations connues du système d'information,
- compare l'empreinte de référence générée et l'empreinte reçue dans les données métier déchiffrées, et valide les données de consommation reçues dans les données métier déchiffrées lorsque l'empreinte de référence générée et l'empreinte reçue dans les données métier déchiffrées correspondent.

Ainsi, il est aisé de faire évoluer une infrastructure de collecte existante *(i.e.,* déjà déployée sur le terrain) qui est adaptée à la collecte des données de consommation des compteurs intelligents primaires, de sorte à permettre en outre la collecte des données de consommation des compteurs intelligents secondaires, tout en assurant la non-répudiation des données de consommation collectées auprès desdits compteurs intelligents secondaires.

Dans un mode de réalisation particulier, les compteurs intelligents primaires sont des compteurs intelligents électriques et les compteurs intelligents secondaires sont des compteurs intelligents de consommation de fluide (gaz, eau, essence,...).

Dans un mode de réalisation particulier, le protocole de communication P1 est de type M-Bus ou wM-Bus.

Dans un mode de réalisation particulier, le protocole de communication P2 est de type DLMS/COSEM.

Dans un mode de réalisation particulier, l'empreinte dérivée desdites données de consommation est calculée en appliquant une fonction de hachage à un quadruplet comprenant un numéro de série dudit compteur, un code de redondance cyclique calculé à partir d'un logiciel de métrologie utilisé pour obtenir les données de consommation, un numéro de certificat certifiant que ledit compteur intelligent secondaire est autorisé à être utilisé dans le système de gestion automatisé, et les données de consommation elles-mêmes.

Dans un mode de réalisation particulier, les données métier selon le protocole P2 sont transportées via le réseau de communication sous forme chiffrée en utilisant une clef de chiffrement symétrique dédiée aux communications entre la passerelle concernée et le concentrateur de données.

Dans un mode de réalisation particulier, les données métier selon le protocole P1 sont transportées depuis le compteur intelligent secondaire concerné jusqu'à la passerelle concernée sous forme chiffrée en utilisant une clef de chiffrement symétrique dédiée aux communications entre ledit compteur intelligent secondaire et la passerelle en question.

Il est également proposé un système de gestion automatisée configuré pour effectuer une collecte de données de consommation, le système de gestion automatisée comportant un système d'information et un concentrateur de données, le système d'information étant configuré pour déléguer la collecte de données au concentrateur de données, le système de gestion automatisé comportant en outre un réseau de communication via lequel le concentrateur de données collecte des données de consommation formatées selon un protocole de communication P2 auprès de compteurs intelligents d'un premier type, dits compteurs intelligents primaires, le système de gestion automatisée comportant en outre au moins une passerelle connectée au réseau de communication, chaque passerelle servant de relais pour collecter des données de consommation formatées selon un protocole de communication P1 auprès de compteurs intelligents d'un deuxième type, dits compteurs intelligents secondaires, le système de gestion automatisé comportant de la circuiterie électronique configurée de telle sorte que :
- chaque compteur intelligent secondaire transmet ses données de consommation accompagnées d'une empreinte dérivée desdites données de consommation, dans des données métier formatées selon le protocole de communication P1 et signées en utilisant une clef privée de chiffrement asymétrique ;
- chaque passerelle relaie, au concentrateur de données via le réseau de communication, les données signées par un dit compteur intelligent secondaire en les encapsulant dans des données métier formatées selon le protocole de communication P2 ;
- le concentrateur de données relaie au système d'information les données métier formatées selon le protocole de communication P2 qui sont reçues via le réseau de communication ; et lorsque les données métier formatées selon le protocole de communication P2 incluent des données métier formatées selon le protocole de communication P1, le système d'information :
- déchiffre les données métier formatées selon le protocole de communication P1 en utilisant une clef publique de chiffrement asymétrique correspondant au compteur intelligent secondaire duquel les données de consommation sont supposées être collectées,
- génère une empreinte de référence à partir des données de consommation reçues dans les données métier déchiffrées et d'informations connues du système d'information,
- compare l'empreinte de référence générée et l'empreinte reçue dans les données métier déchiffrées, et valide les données de consommation reçues dans les données métier déchiffrées lorsque l'empreinte de référence générée et l'empreinte reçue dans les données métier déchiffrées correspondent.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un système de gestion automatisée pour collecter des données de consommation ;
[Fig. 1B] illustre schématiquement un agencement d'un système d'information du système de gestion automatisée, dans un mode de réalisation particulier ;
[Fig. 2] illustre schématiquement un exemple d'architecture matérielle, qui est adapté pour implémenter un dispositif du système de gestion automatisée ;
[Fig. 3A] illustre schématiquement un premier empilement protocolaire adapté pour réaliser des collectes de données de consommation dans le système de gestion automatisée vis-à-vis de compteurs intelligents secondaires ;
[Fig. 3B] illustre schématiquement un deuxième empilement protocolaire adapté pour réaliser des collectes de données de consommation dans le système de gestion automatisée vis-à-vis de compteurs intelligents secondaires ;
[Fig. 3C] illustre schématiquement un troisième empilement protocolaire adapté pour réaliser des collectes de données de consommation dans le système de gestion automatisée vis-à-vis de compteurs intelligents secondaires ;
[Fig. 4A] illustre schématiquement un premier empilement protocolaire adapté pour réaliser des collectes de données de consommation dans le système de gestion automatisée vis-à-vis de compteurs intelligents primaires ;
[Fig. 4B] illustre schématiquement un deuxième empilement protocolaire adapté pour réaliser des collectes de données de consommation dans le système de gestion automatisée vis-à-vis de compteurs intelligents primaires ;
[Fig. 5] illustre schématiquement une succession de transmissions et de traitements dans le cadre d'une collecte de données de consommation issues d'un compteur intelligent secondaire ;
[Fig. 6] illustre schématiquement un algorithme implémenté par un compteur intelligent secondaire pour transmettre une trame à une passerelle ;
[Fig. 7] illustre schématiquement un algorithme implémenté par une passerelle pour transmettre une trame à un concentrateur de données ;
[Fig. 8] illustre schématiquement un algorithme implémenté par le concentrateur de données pour transmettre une trame au système d'information ; et
[Fig. 9] illustre schématiquement un algorithme implémenté par le système d'information pour traiter une trame reçue du concentrateur de données.

### EXPOSE DETAILLE DE MODES DE REALISATION

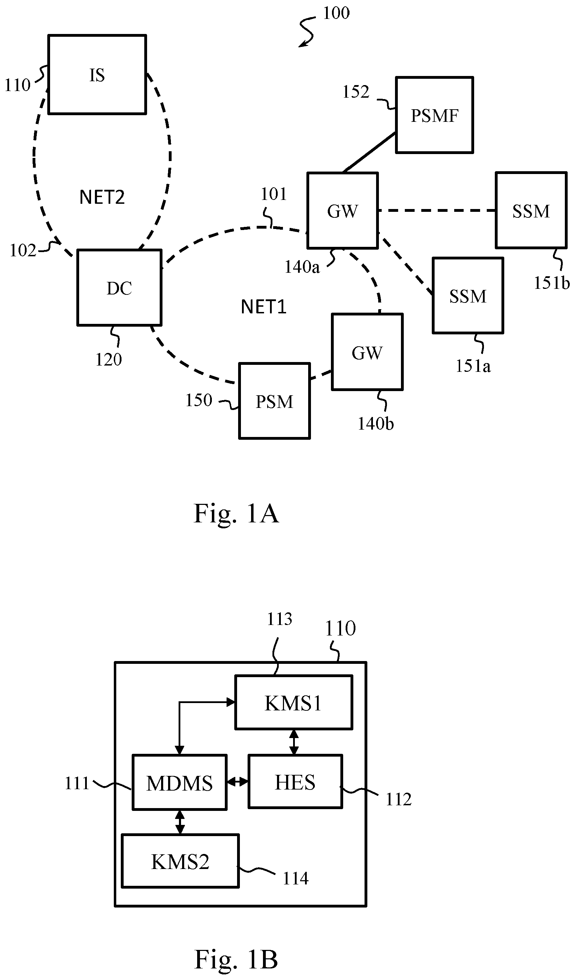

La **Fig. 1A** illustre schématiquement un système de gestion automatisée 100 dans lequel la présente invention peut être implémentée. Le système de gestion automatisée 100 est configuré pour réaliser une collecte de données de consommation issues de mesures effectuées par des compteurs intelligents 150, 151a, 151b, 152.

Deux types de compteurs intelligents sont schématiquement illustrés sur la Fig. 1A : des compteurs intelligents dits primaires PSM (« Primary Smart Meters » en anglais) 150, et des compteurs intelligents dits secondaires SSM (« Secondary Smart Meters » en anglais) 151a, 151b. Les compteurs intelligents secondaires SSM 151a, 151b sont configurés pour implémenter un protocole de communication P1. Les compteurs intelligents primaires PSM 150 sont configurés pour implémenter un protocole de communication P2 distinct du protocole de communication P1. Les compteurs intelligents secondaires SSM 151a, 151b n'implémentent pas le protocole de communication P2.

Comme détaillé ci-après, la Fig. 1A montre aussi une fonctionnalité particulière, à savoir une fonctionnalité de compteur intelligent primaire PSMF 152 rattachée à une passerelle GW 140a, 140b. La fonctionnalité de compteur intelligent primaire PSMF 152 est configurée pour implémenter le protocole de communication P2, comme les compteurs intelligents primaires PSM 150.

La collecte des données de consommation issues des compteurs intelligents est effectuée au travers d'un réseau de communication NET1 101. Les compteurs intelligents primaires PSM 150 disposent d'une interface de communication avec le réseau de communication NET1 101. La collecte des données de consommation issues des compteurs intelligents primaires PSM 150 est ainsi réalisée directement auprès desdits compteurs intelligents primaires PSM 150.

La collecte des données de consommation issues des compteurs intelligents secondaires SSM 151a, 151b est effectuée par l'intermédiaire de passerelles GW (« Gateway » en anglais) 140a, 140b. Les passerelles GW 140a, 140b servent de relais pour les données de consommation issues des compteurs intelligents secondaires SSM 151a, 151b, qui ne disposent pas d'interface de communication adaptée au réseau de communication NET1 101.

Dans un mode de réalisation particulier, comme illustré sur la Fig. 1A, au moins une passerelle GW 140a dispose d'une fonctionnalité de compteur électrique intelligent primaire PSMF 152. La fonctionnalité de compteur électrique intelligent primaire PSMF 152 est incluse dans la passerelle GW 140a ou est implémentée dans un dispositif connecté à la passerelle GW 140a par une simple couche physique électrique, par exemple une couche physique selon la norme EIA-485 (souvent appelée RS-485) ou selon la norme RS-232. En d'autres termes, la passerelle GW 140a interagit avec la fonctionnalité de compteur électrique intelligent primaire PSMF 152, afin notamment d'obtenir des données de consommation issues de la fonctionnalité de compteur électrique intelligent primaire PSMF 152, qui implémente le protocole de communication P2. L'ensemble formé par la passerelle GW 140a et la fonctionnalité de compteur électrique intelligent primaire PSMF 152 est ainsi équivalent à un compteur intelligent primaire PSM 150 (où la passerelle GW 140a, 140b fournit un accès au réseau de communication NET1 101), avec en outre une capacité de relais pour le compte de compteurs intelligents secondaires SSM 151a, 151b.

Dans un mode de réalisation particulier, le réseau de communication NET1 101 est un réseau CPL, les compteurs intelligents primaires PSM 150 sont des compteurs électriques et les compteurs intelligents secondaires SSM 151a, 151b sont des compteurs de consommation de fluide (eau, gaz ou autre). Les compteurs intelligents secondaires SSM 151a, 151b fonctionnent alors typiquement sur batterie. Par exemple, le réseau de communication NET1 101 est conforme aux spécifications G3-PLC ou PRIME, ou G3-Hybrid ou PRIME-Hybrid.

Les données de consommation collectées sont traitées par un système d'information IS (« Information system » en anglais) 110. Le système d'information IS 110 délègue la collecte des données de consommation à des concentrateurs de données DC (« Data Concentrateur » en anglais) 120, de manière à répartir la charge de collecte. Chaque concentrateur de données DC 120 gère ainsi un réseau de collecte, tel que le réseau de communication NET1 101, et sert de relais entre les compteurs intelligents et le système d'information IS 110. Ainsi, au moins un concentrateur de données DC 120 gère un réseau de collecte auquel sont connectés des compteurs intelligents primaires PSM 150, ainsi que des compteurs intelligents secondaires SSM 151a, 151b, et potentiellement des fonctionnalités de compteurs intelligents primaires PSMF 152, au travers de passerelles GW 140a, 140b.

Comme schématiquement illustré sur la Fig. 1A, le concentrateur de données DC 120 est externe au système d'information IS 110 et communique avec le système d'information IS 110 grâce à un réseau de communication NET2 102. En variante de réalisation, le concentrateur de données DC 120 est virtualisé au sein du système d'information IS 110. Par exemple, le réseau de communication NET2 102 est un réseau de communication sans-fil de type 5G (5^{e} Génération). Selon d'autres exemples, le réseau de communication NET2 102 est un réseau de communication sans-fil de type GPRS (« General Packet Radio Service » en anglais), UMTS (« Universal Mobile Telecommunication System » en anglais), LTE (« Long-Term Evolution » en anglais), NB-IoT (« Narrowband Internet of Things »), 2G, ou 3G.

Les compteurs intelligents primaires PSM 150, ainsi que la fonctionnalité de compteur intelligent primaire PSMF 152, mettent en forme leurs données de consommation en utilisant un formatage conforme au protocole de communication P2. Le protocole de communication P2 spécifie des formats de données métier (« business data » en anglais *(i.e.,* données applicatives)), ainsi que des données de transport et des règles de transport adaptés à la transmission de ces données métier. Ainsi, pour pouvoir interpréter ces données métier, un dispositif doit être compatible avec le protocole de communication P2 (*i.e.,* au-delà de l'interprétation des données de transport et de la connaissance des règles de transport). Le concentrateur de données DC 120 est compatible avec le protocole de communication P2.

Dans un mode de réalisation particulier, le protocole de communication P2 est conforme aux spécifications DLMS/COSEM (« Device Language Message
Specification / Companion Specification for Energy Metering » en anglais), telles que décrites dans la série de standards IEC 62056.

Les compteurs intelligents primaires SSM 151a, 151b mettent en forme leurs données de consommation en utilisant un formatage conforme au protocole de communication P1. Le protocole de communication P1 spécifie des formats de données métier (*i.e*., données applicatives), ainsi que des données de transport et des règles de transport adaptés à la transmission de ces données métier. Ainsi, pour pouvoir interpréter ces données métier, un dispositif doit être compatible avec le protocole de communication P1 (*i.e.,* au-delà de l'interprétation des données de transport et de la connaissance des règles de transport). Le protocole de communication P1 est différent du protocole de communication P2. Le concentrateur de données DC 120 n'est pas compatible avec le protocole de communication P1.

Dans un mode de réalisation particulier, le protocole de communication P1 est conforme aux spécifications de télérelève M-Bus (« Meter Bus » en anglais), telles que définies dans la norme EN 13757-2, ou aux spécifications wM-Bus (« Wireless M-Bus » en anglais), telles que définies dans la norme EN 13757-4.

La **Fig. 1B** illustre schématiquement un agencement du système d'information IS 110, dans un mode de réalisation particulier. Ainsi, le système d'information IS 110 comprend diverses composantes dont un système de tête de réseau HES (« Head-End System » en anglais) 112, un système de gestion de données de compteurs MDMS (« Meter Data Management System » en anglais) 111, un premier système de gestion de clés (KMS, « Key Management System » en anglais) 113, libellé KMS1, et un deuxième système de gestion de clés 114, libellé KMS2.

Le système de tête de réseau HES 112 est configuré pour effectuer la gestion de transmissions dans le cadre de la collecte de données de consommation, et le système de gestion de données de compteurs MDMS 111 est configuré pour traiter les données de consommation collectées. Le premier système de gestion de clés KMS1 113 est configuré pour stocker des clefs de chiffrement symétrique. Il existe une première clef de chiffrement symétrique SK1 pour chaque compteur intelligent secondaire SSM 151a, 151b, pour communiquer de manière sécurisée avec la passerelle GW 140a, 150b de laquelle ledit compteur intelligent secondaire SSM 151a, 151b dépend. Il existe une deuxième clef de chiffrement symétrique SK2 pour chaque compteur intelligent primaire PSM 150 pour communiquer de manière sécurisée avec le concentrateur de données DC 120. Il existe aussi une deuxième clef de chiffrement symétrique SK2 pour chaque passerelle GW 140a, 140b, pour communiquer de manière sécurisée avec le concentrateur de données DC 120. Le premier système de gestion de clés KMS1 113 est configuré pour assurer que chaque dispositif du système de gestion automatisé 100 dispose de chaque clef de chiffrement symétrique SK1, SK2 qui lui est nécessaire.

Le deuxième système de gestion de clés KMS2 114 est configuré pour stocker des clefs publiques de chiffrement asymétrique. Il existe une clef publique de chiffrement asymétrique AK1 pour chaque compteur intelligent secondaire SSM 151a, 151b. A chaque clef publique de chiffrement asymétrique AK1 correspond une clef privée de chiffrement asymétrique AK2, qui est détenue dans le système de gestion automatisée 100 uniquement par le compteur intelligent secondaire SSM 151a, 151b en question. La clef privée de chiffrement asymétrique AK2 est par exemple dérivée d'un numéro de série du compteur intelligent secondaire SSM 151a, 151b correspondant. La clef publique de chiffrement asymétrique AK1 est utilisée pour déchiffrer des données chiffrées à l'aide de la clef privée de chiffrement asymétrique AK2 correspondante. Chaque paire de clef publique de chiffrement asymétrique AK1 et clef privée de chiffrement asymétrique AK2 permet d'assurer la non-répudiation des données de consommation transmises depuis le compteur intelligent secondaire SSM 151a, 151b en question jusqu'au système d'information IS 110.

Ainsi, les clefs de chiffrement stockées par le deuxième système de gestion de clés KMS2 114 sont accédées par le système de gestion de données de compteurs MDMS 111. Et selon les infrastructures de système d'information IS 110 et de système de gestion automatisée 100, les clés de chiffrement stockées par le premier système de gestion de clés KMS1 113 sont accédées par le biais du système de gestion de données de compteurs MDMS 111 et/ou par le biais du système de tête de réseau HES 112.

En variante, le premier système de gestion de clés KMS1 113 et le deuxième système de gestion de clés KMS2 114 sont fusionnés en un seul et même système de gestion de clés KMS stockant alors les clefs de chiffrement symétrique et les clefs publiques de chiffrement asymétrique susmentionnées.

Les composantes du système d'information IS 110 communiquent par exemple en utilisant l'Internet, ou plus généralement un réseau de type IP (« Internet Protocol » en anglais), ou en utilisant potentiellement un réseau privé virtuel VPN (« Virtual Private Network » en anglais).

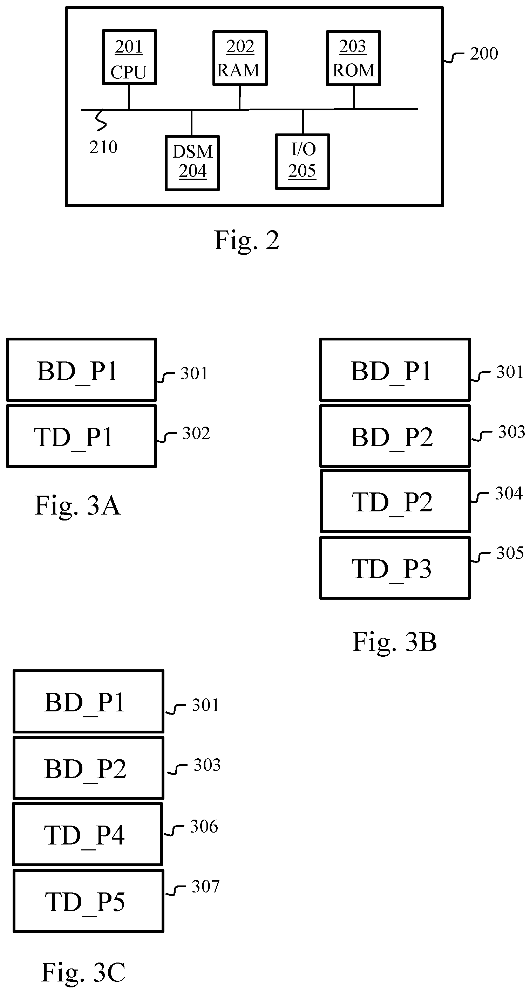

La **Fig. 2** illustre schématiquement un exemple d'architecture matérielle 200, qui est adapté pour implémenter tout contrôleur de dispositif du système de gestion automatisée 100. L'exemple d'architecture matérielle est ainsi adapté pour implémenter un contrôleur de système d'information IS 110, ou de toute composante du système d'information IS 110. L'exemple d'architecture matérielle est aussi adapté pour implémenter un contrôleur de concentrateur de données DC 120. L'exemple d'architecture matérielle est aussi adapté pour implémenter un contrôleur de compteur intelligent primaire PSM 150. L'exemple d'architecture matérielle est aussi adapté pour implémenter un contrôleur de compteur intelligent secondaire SSM 151a, 151b. L'exemple d'architecture matérielle est aussi adapté pour implémenter un contrôleur de passerelle GW 140a, 140b. L'exemple d'architecture matérielle est aussi adapté pour implémenter un contrôleur de dispositif implémentant une fonctionnalité de compteur électrique intelligent primaire PSMF 152.

L'architecture matérielle 200 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, ou EEPROM (« Electrically Erasable Programmable ROM » en anglais), ou une mémoire de type Flash ; un support de stockage de données DSM (« Data Storage Medium » en anglais), tel qu'un disque dur HDD (« Hard Disk Drive » en anglais), ou un lecteur de support de stockage, tel qu'un lecteur de cartes SD (« Secure Digital » en anglais) ; et au moins une interface de communication COM 205. Selon le dispositif considéré, l'architecture matérielle 200 peut en outre comprendre des entrées/sorties (« Inputs / Outputs en anglais), par exemple pour effectuer des mesures de consommation.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication. Lorsque l'architecture matérielle 200 est mise sous tension, le processeur 201 est capable de lire de la RAM 202 des instructions et de les exécuter. Ces instructions forment un programme d'ordinateur causant la mise en œuvre, par le processeur 201, des étapes et algorithmes décrits ici en relation avec le dispositif concerné.

Tout ou partie des étapes et algorithmes décrit ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) ou un ensemble de composants (« chipset » en anglais), tel qu'un FPGA (« Field-Programmable Gate Array » en anglais) ou un ASIC (« Application-Specific Integrated Circuit » en anglais). D'une manière générale, chaque dispositif du système de gestion automatisée 100 comprend de la circuiterie électronique agencée et configurée pour implémenter les étapes et algorithmes décrits ici en relation avec le dispositif en question.

Les **Fig. 3A à 3C** illustrent schématiquement des empilements protocolaires adaptés pour réaliser des collectes de données de consommation dans le système de gestion automatisée 100 vis-à-vis de compteurs intelligents secondaires SSM 151a, 151b.

La Fig. 3A montre un premier empilement protocolaire, qui est adapté à transmettre des données de consommation depuis un compteur intelligent secondaire SSM 151a, 151b vers une passerelle GW 140a, 140b de laquelle ledit compteur intelligent secondaire SSM 151a, 151b dépend. Ce premier empilement protocolaire comporte :
- des données métier BD_P1 301 ;
- des données de transport TD_P1 302.

Les données métier BD_P1 301 sont formatées selon le protocole de communication P1. Les données métier BD_P1 301 incluent les données de consommation, qui doivent être transmises jusqu'au système d'information IS 110. Les données métier BD_P1 301 sont signées à l'aide de la clef privée de chiffrement asymétrique AK2 du compteur intelligent secondaire SSM 151a, 151b d'où proviennent lesdites données de consommation.

Par exemple, les données métier BD_P1 301 sont obtenues par chiffrement asymétrique d'un ensemble de données incluant une empreinte notée HASH à partir d'un quadruplet comprenant :
- un numéro de série du compteur intelligent secondaire SSM 151a, 151b en question ;
- un code de redondance cyclique CRC (« Cyclic Redundancy Code » en anglais) calculé à partir d'un logiciel de métrologie utilisé par le compteur intelligent secondaire SSM 151a, 151b en question ;
- un numéro de certificat MID (« Measurement Instruments Directive » en anglais) attribué au compteur intelligent secondaire SSM 151a, 151b en question, ledit certificat certifiant que le compteur intelligent secondaire SSM 151a, 151b en question a passé des tests de certification l'autorisant à être utilisé dans le système de gestion automatisée 100 (notamment pour intervenir dans des opérations de facturation de consommation) ;
- les données de consommation D.

Dans le cadre de la métrologie légale, le code de redondance cyclique CRC est calculé lors de la génération des logiciels de métrologie. Ce code de redondance cyclique CRC est intégré au logiciel de métrologie auquel ledit code de redondance cyclique CRC correspond. Le logiciel métrologique est validé et ensuite envoyé en certification pour obtenir une certification. Une fois la certification obtenue, un numéro de certificat MID est fourni au système de gestion des données de compteurs MDMS 111, qui stocke alors en mémoire pour chaque compteur ainsi certifié, le code de redondance cyclique CRC du logiciel de métrologie dudit compteur et le numéro de certificat MID, en association avec le numéro de série du compteur en question.

Pour obtenir l'empreinte, une fonction de hachage H(.) est utilisée. La fonction de hachage H(.) est une fonction particulière qui, à partir d'une donnée fournie en entrée, calcule une empreinte numérique servant à identifier rapidement la donnée initiale. Autrement dit, à un quadruplet donné correspond une empreinte unique qui est le résultat de la fonction de hachage H(.). Dès lors, pour deux quadruplets différents Q1 et Q2, le compteur intelligent secondaire SSM 151a, 151b génère deux empreintes S1=H(Q1) et S2=H(Q2) distinctes.

Dans un mode de réalisation, la fonction H(.) est une fonction SHA-2 (par exemple, SHA-224, SHA-256, SHA-384 ou SHA-512). Dans le cas où la fonction H(.) est de type SHA-256, l'empreinte obtenue HASH comprend 256 bits. Dans le cas où la fonction H est de type SHA-512, l'empreinte obtenue HASH comprend 512 bits. D'autres fonctions peuvent être utilisées comme fonction H(.), comme par exemple une fonction SHA-3, une fonction MD4, une fonction MD5, une fonction SHA-1, toutes bien connues dans le domaine de la cryptographie.

Dans une variante de réalisation, le quadruplet est complété par des bits de bourrage afin d'obtenir un alignement sur un nombre entier d'octets adapté à la fonction de hachage H(.) à appliquer.

Une concaténation de l'empreinte obtenue avec les données de consommation est alors incluse dans les données métier BD_P1 301 en respectant le formatage selon le protocole de communication P1.

Les données de transport TD_P1 302 sont des données de transport selon le protocole de communication P1. Les données de transport TD_P1 302 et les données métier BD_P1 301 sont chiffrées avec la clef de chiffrement symétrique SK1 connue du compteur intelligent secondaire SSM 151a, 151b en question et de la passerelle GW 140a, 140b de laquelle ledit compteur intelligent secondaire SSM 151a, 151b dépend.

La Fig. 3B montre un deuxième empilement protocolaire, qui est adapté à transmettre des données de consommation issues d'un compteur intelligent secondaire SSM 151a, 151b, depuis une passerelle GW 140a, 140b (de laquelle ledit compteur intelligent secondaire SSM 151a, 151b dépend) vers le concentrateur de données DC 120. Ce deuxième empilement protocolaire comporte :
- les données métier BD_P1 301 ;
- des données métier BD_P2 303 ;
- des données de transport TD_P2 304 ;
- des données de transport TD_P3 305.

Les données métier BD_P1 301 sont encapsulées dans les données métier BD_P2 303, par exemple dans un objet (par exemple, un objet COSEM) décrit parmi les données métier du protocole de communication de communication P2. Pour ce faire, les données métier BD_P1 301 ont préalablement été déchiffrées avec la clef de chiffrement symétrique SK1 connue du compteur intelligent secondaire SSM 151a, 151b en question et de la passerelle GW 140a, 140b. Les données métier BD_P1 301 restent cependant signées (à l'aide de la clef privée de chiffrement asymétrique AK2).

Les données de transport TD_P2 304 sont des données de transport selon le protocole P2.

Les données de transport TD_P2 304 et les données métier BD_P2 303 (y compris les données métier BD_P1 301 encapsulées) sont chiffrées avec la clef de chiffrement symétrique SK2 connue de la passerelle GW 140a, 140b en question et du concentrateur de données DC 120.

Les données de transport TD_P3 305 sont des données de transport adaptées au transport de trames dans le réseau de communication NET1 101. Par exemple, les données de transport TD_P3 305 sont conformes au transport spécifié dans les spécifications G3-PLC.

La Fig. 3C montre un troisième empilement protocolaire, qui est adapté à transmettre des données de consommation issues d'un compteur intelligent secondaire SSM 151a, 151b, depuis le concentrateur de données DC 120 vers le système d'information IS 110. Ce troisième empilement protocolaire comporte :
- les données métier BD_P1 301 ;
- les données métier BD_P2 303 ;
- des données de transport TD_P4 306 ;
- des données de transport TD_P5 307.

Pour ce faire, les données métier BD_P2 303 (y compris les données métier BD_P1 301 encapsulées) ont été préalablement déchiffrées avec la clef de chiffrement symétrique SK2 connue de la passerelle GW 140a, 140b en question et du concentrateur de données DC 120. Ici encore, les données métier BD_P1 301 restent signées (à l'aide de la clef privée de chiffrement asymétrique AK2). Il appartient au système d'information IS 110 de les déchiffrer, comme détaillé ci-après.

Les données de transport TD_P4 306 sont des données de transport de couche intermédiaire (par exemple, de couche réseau dans le modèle OSI) ou de couche applicative. Par exemple, les données de transport TD_P4 306 sont conformes au transport spécifié dans les standards XML/HTTPS (« eXtensible Markup Language / Hypertext Transfer Protocol - Secure » en anglais). Plusieurs couches intermédiaires peuvent ainsi être empilées dans ce troisième empilement protocolaire.

Les données de transport TD_P5 307 sont des données de transport adaptées au transport de trames dans le réseau de communication NET2 102. Par exemple, les données de transport TD_P5 307 sont conformes au transport spécifié dans les standards 5G.

Le troisième empilement protocolaire peut aussi être schématiquement utilisé pour transférer les données de consommation au sein du système d'information IS 110, typiquement depuis le système de tête de réseau HES 112 vers le système de gestion de données de compteurs MDMS 111, avec d'autres couches protocolaires en jeu. Par exemple, les données de transport TD_P4 306 sont des données de transport de type IPv6 ou IPv4, et les données de transport TD_P5 307 sont des données de transport de type Ethernet.

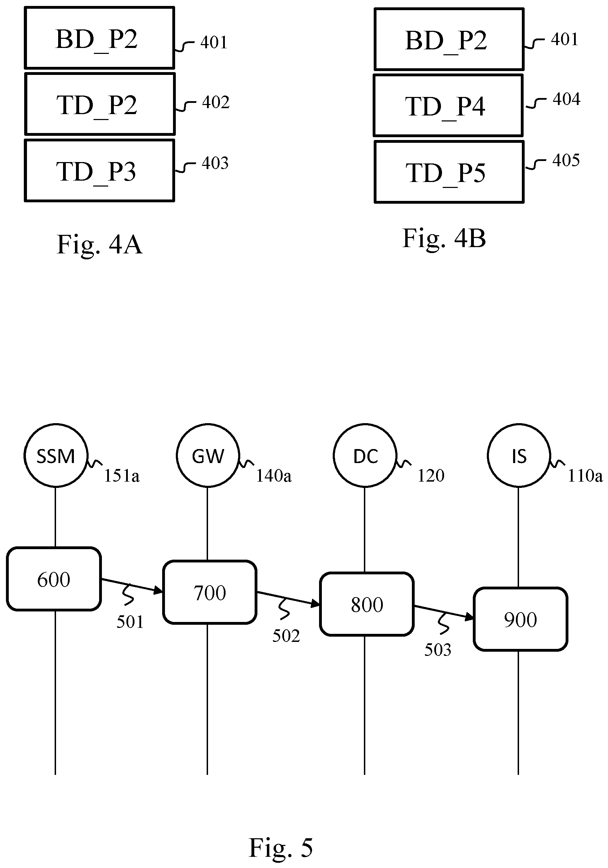

Les **Fig. 4A et 4B** illustrent schématiquement des empilements protocolaires adaptés pour réaliser des collectes de données de consommation dans le système de gestion automatisée 100 vis-à-vis de compteurs intelligents primaires PSM 150. Dans ce cas, le protocole de communication P1 n'est pas utilisé. Ainsi, contrairement aux Figs. 3A à 3C, le chiffrement asymétrique n'est pas ici utilisé puisque les données de consommation sont directement formatées selon le protocole de communication P2. En variante, il est aussi possible de faire ici de la non-répudiation, en utilisant un chiffrement asymétrique de même nature que pour les compteurs intelligents secondaires.

La Fig. 4A montre un premier empilement protocolaire, qui est adapté à transmettre des données de consommation depuis un compteur intelligent primaire PSM 150 vers le concentrateur de données DC 120. Ce premier empilement protocolaire comporte :
- des données métier BD_P2 401 ;
- des données de transport TD_P2 402 ;
- des données de transport TD_P3 403.

Les données métier BD_P2 401 sont formatées selon le protocole de communication P2. Les données métier BD_P2 401 incluent les données de consommation, qui doivent être transmises jusqu'au système d'information IS 110.

Par exemple, les données métier BD_P2 401 sont un ensemble de données incluant une empreinte notée HASH calculée à partir d'un quadruplet, comme déjà décrit en relation avec les données métier BD_P1 301 (sans le chiffrement asymétrique, et aussi sous un format différent puisque le protocole de communication P2 est directement utilisé).

Les données de transport TD_P2 402 sont des données de transport selon le protocole de communication P2. Comme dans le cas des compteurs intelligents secondaires SSM 151a, 151b, les données de transport TD_P2 402 et les données métier BD_P2 401 sont chiffrées avec la clef de chiffrement symétrique SK2 connue du compteur intelligent primaire PSM 150 en question et du concentrateur de données DC 120.

Les données de transport TD_P3 403 sont des données de transport adaptées au transport de trames dans le réseau de communication NET1 101 (comme les données de transport TD_P3 305).

La Fig. 4B montre un deuxième empilement protocolaire, qui est adapté à transmettre des données de consommation (issues d'un compteur intelligent primaire PSM 150) depuis le concentrateur de données DC 120 vers le système d'information IS 110. Ce deuxième empilement protocolaire comporte :
- des données métier BD_P2 401 ;
- des données de transport TD_P4 404 ;
- des données de transport TD_P5 405.

Pour ce faire, les données métier BD_P2 401 ont été préalablement déchiffrées avec la clef de chiffrement symétrique SK2 connue de la passerelle GW 140a, 140b en question et du concentrateur de données DC 120.

Les données de transport TD_P4 404 (comme les données de transport TD_P4 306) sont des données de transport de couche intermédiaire (par exemple, de couche réseau dans le modèle OSI) ou de couche applicative. Plusieurs couches intermédiaires peuvent ainsi être empilées dans ce deuxième empilement protocolaire.

Les données de transport TD_P5 405 (comme les données de transport TD_P5 307) sont des données de transport adaptées au transport de trames dans le réseau de communication NET2 102.

A noter que des chiffrements symétriques additionnels, en complément de ceux décrits ici en relation avec les Figs. 3A à 3C, 4A et 4B, peuvent être appliqués par des couches protocolaires intermédiaires.

La Fig. 5 illustre schématiquement une succession de transmissions et de traitements dans le cadre d'une collecte de données de consommation issues d'un compteur intelligent secondaire SSM, par exemple le compteur intelligent secondaire SSM 151a via la passerelle GW 140a.

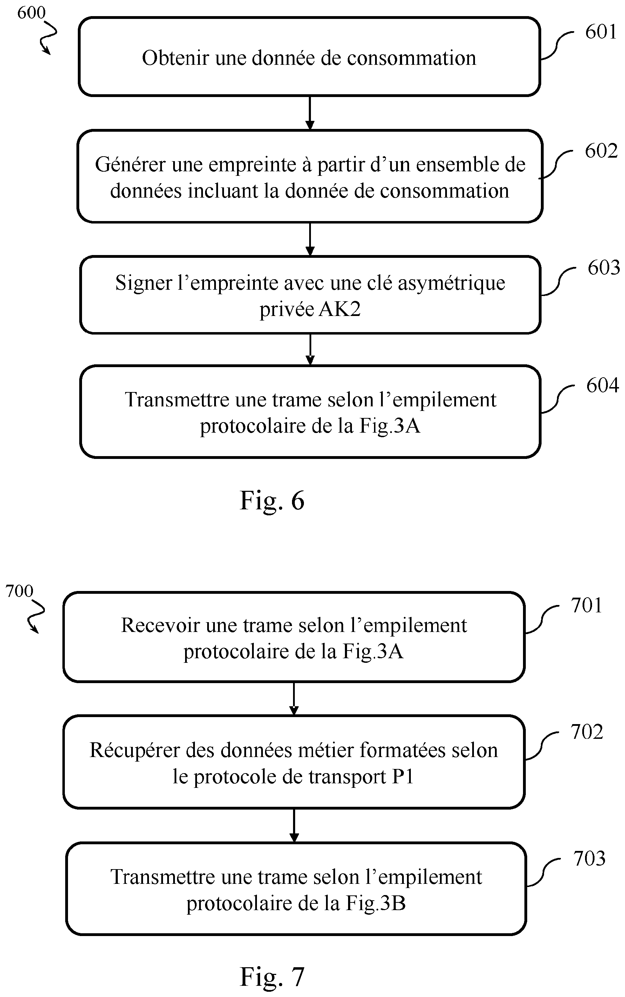

Le compteur intelligent secondaire SSM 151a effectue un traitement 600 (tel que décrit ci-après en relation avec la Fig. 6) pour transmettre, à destination de la passerelle GW 140a, une trame 501 selon l'empilement protocolaire de la Fig. 3A.

La passerelle GW 140a effectue alors un traitement 700 (tel que décrit ci-après en relation avec la Fig. 7) pour transmettre, à destination du concentrateur de données DC 120, une trame 502 selon l'empilement protocolaire de la Fig. 3B.

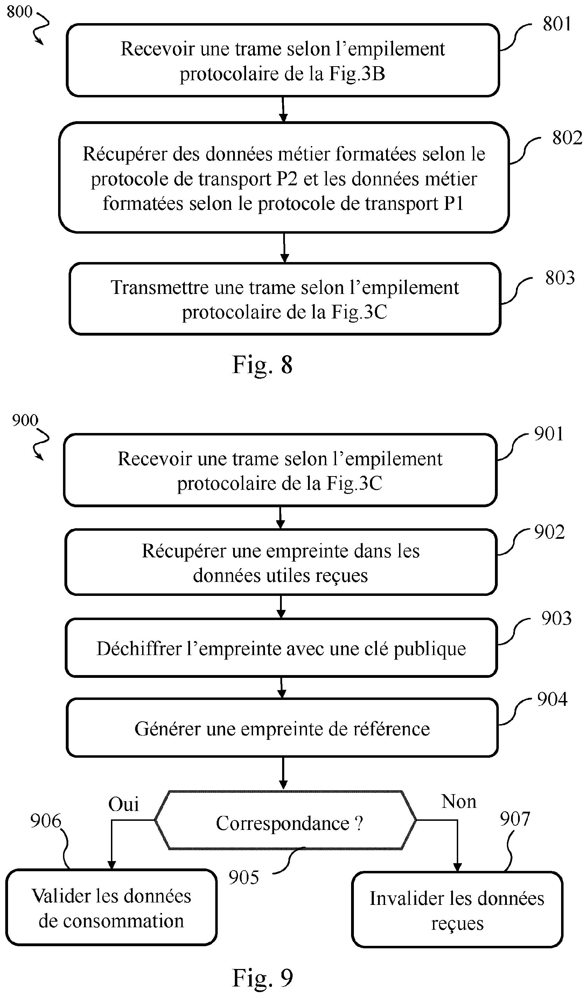

Le concentrateur de données DC 120 effectue alors un traitement 800 (tel que décrit ci-après en relation avec la Fig. 8) pour transmettre, à destination du système d'information IS 110, une trame 503 selon l'empilement protocolaire de la Fig. 3C.

Le système d'information IS 110 effectue alors un traitement 900 (tel que décrit ci-après en relation avec la Fig. 9) pour traiter les données de consommation reçues.

La **Fig. 6** illustre schématiquement un algorithme implémenté par un compteur intelligent secondaire SSM 151a, 151b pour transmettre des données de consommation à destination du système d'information IS 110 par l'intermédiaire d'une passerelle GW 140a, 140b.

Dans une étape 601, le compteur intelligent secondaire SSM 151a, 151b obtient, grâce à son logiciel de métrologie, une donnée de consommation D à transmettre au système d'information IS 110.

Dans une étape 602, le compteur intelligent secondaire SSM 151a, 151b génère préférentiellement une empreinte HASH à partir d'un ensemble de données incluant la donnée de consommation D. L'empreinte est, dans un mode de réalisation particulier, générée comme précédemment décrit en relation avec la Fig. 3A.

Dans une étape 603, le compteur intelligent secondaire SSM 151a, 151b signe l'empreinte (ou à défaut la donnée de consommation D) grâce à sa clef privée de chiffrement asymétrique AK2 et obtient ainsi une empreinte signée HASH'.

Dans une étape 604, le compteur intelligent secondaire SSM 151a, 151b transmet une trame selon l'empilement protocolaire de la Fig. 3A. Les données métier formatées selon le protocole de communication P1 incluent donc l'empreinte chiffrée HASH' (chiffrée avec la clef privée de chiffrement asymétrique AK2). Les données métier et de transport selon le protocole de communication P1 sont par ailleurs chiffrées avec la clef de chiffrement symétrique SK1 détenue par le compteur intelligent secondaire SSM 151a, 151b en question.

La Fig. 7 illustre schématiquement un algorithme implémenté par une passerelle GW 140a, 140b pour relayer des données de consommation, issues d'un compteur intelligent secondaire SSM 151a, 151b, à destination du système d'information IS 110 par l'intermédiaire du concentrateur de données DC 120.

Dans une étape 701, la passerelle GW 140a, 140b reçoit une trame selon l'empilement protocolaire de la Fig. 3A.

Dans une étape 702, la passerelle GW 140a, 140b récupère, dans la trame reçue, les données métier formatées selon le protocole de communication P1 (qui incluent donc l'empreinte chiffrée HASH'). Les données métier et de transport selon le protocole de communication P1 sont donc déchiffrées avec la clef de chiffrement symétrique SK1 correspondant au compteur intelligent secondaire SSM 151a, 151b en question.

Dans une étape 703, le compteur intelligent secondaire SSM 151a, 151b transmet une trame selon l'empilement protocolaire de la Fig. 3B. Les données métier formatées selon le protocole de communication P2 incluent alors l'empreinte HASH'. Les données métier et de transport selon le protocole de communication P2 sont par ailleurs chiffrées avec la clef de chiffrement symétrique SK2 détenue par la passerelle GW 140a, 140b en question.

La **Fig. 8** illustre schématiquement un algorithme implémenté par le concentrateur de données DC 120 pour relayer des données de consommation, issues d'un compteur intelligent secondaire SSM 151a, 151b et reçues par l'intermédiaire d'une passerelle GW 140a, 140b, à destination du système d'information IS 110.

Dans une étape 801, le concentrateur de données DC 120 reçoit une trame selon l'empilement protocolaire de la Fig. 3B.

Dans une étape 802, le concentrateur de données DC 120 récupère, dans la trame reçue, les données métier formatées selon le protocole de communication P2, qui incluent donc l'empreinte HASH' (sans que le concentrateur de données DC 120 n'ait à le savoir). Les données métier et de transport selon le protocole de communication P2 sont par ailleurs déchiffrées avec la clef de chiffrement symétrique SK2 correspondant à la passerelle GW 140a, 140b en question.

Dans une étape 803, le concentrateur de données DC 120 transmet une trame selon l'empilement protocolaire de la Fig. 3C. La trame inclut les données métier formatées selon le protocole de communication P2, qui incluent donc l'empreinte HASH' dans un format selon le protocole de communication P1.

La **Fig. 9** illustre schématiquement un algorithme implémenté par le système d'information IS 110 pour traiter une trame reçue du concentrateur de données DC 120 dans le cadre d'une collecte de données de consommation issues d'un compteur intelligent secondaire SSM 151a, 151b.

Dans une étape 901, le système d'information IS 110 reçoit une trame selon l'empilement protocolaire de la Fig. 3C.

Dans une étape 902, le système d'information IS 110 (plus particulièrement le système de gestion de données de compteurs MDMS 111) interprète les données métier formatées selon le protocole de communication P2 et récupère alors les données métier formatées selon le protocole de communication P1 qui y sont encapsulées. En interprétant les données métier formatées selon le protocole de communication P1, le système d'information IS 110 récupère alors l'empreinte signée HASH'.

Le système d'information IS 110 (plus particulièrement le système de gestion de données de compteurs MDMS 111) est capable de déterminer si les données métier formatées selon le protocole de communication P2 concernent, d'une part, un compteur intelligent primaire PSM 150 ou une fonctionnalité de compteur intelligent primaire PSMF 152, ou d'autre part, un compteur intelligent secondaire SSM 151a, 151b. Selon une possibilité, les données métier formatées selon le protocole de communication P2 incluent un objet (par exemple, un objet COSEM) spécifique à l'inclusion de données métier formatées selon le protocole de communication P1. Selon une autre possibilité, les données métier formatées selon le protocole de communication P2 incluent des informations identifiant le compteur intelligent, comme un numéro de série, le système d'information IS 110 sachant pour chaque compteur intelligent du système de gestion automatisée 100 si celui-ci est primaire ou secondaire.

Dans une étape 903, le système d'information IS 110 (plus particulièrement le système de gestion de données de compteurs MDMS 111) déchiffre l'empreinte signée HASH' en utilisant la clef publique de chiffrement asymétrique AK2 qui est associée au compteur intelligent secondaire qui a généré l'empreinte signée HASH'. Les données métier formatées selon le protocole de communication P2 incluent des informations identifiant le compteur intelligent secondaire SSM concerné, comme un numéro de série, et le système d'information IS 110 détient la clef publique de chiffrement asymétrique AK2 en correspondance avec ces informations identifiant ledit compteur intelligent secondaire SSM 151a, 151b.

Dans une étape 904, le système d'information IS 110 (plus particulièrement le système de gestion de données de compteurs MDMS 111) génère une empreinte de référence avec les informations qu'il détient concernant le compteur intelligent secondaire SSM 151a, 151b en question. L'empreinte de référence est générée de la même manière que l'empreinte HASH générée par ledit compteur intelligent secondaire SSM 151a, 151b.

Dans une étape 905, le système d'information IS 110 (plus particulièrement le système de gestion de données de compteurs MDMS 111) compare l'empreinte déchiffrée à l'étape 903 et l'empreinte de référence obtenue à l'étape 904. S'il y a correspondance entre les deux empreintes, une étape 906 est effectuée ; sinon, une étape 907 est effectuée.

Dans l'étape 906, le système d'information IS 110 (plus particulièrement le système de gestion de données de compteurs MDMS 111) valide les données de consommation reçues. Celles-ci proviennent effectivement dudit ledit compteur intelligent secondaire SSM 151a, 151b et n'ont pas été altérées.

Dans l'étape 907, le système d'information IS 110 (plus particulièrement le système de gestion de données de compteurs MDMS 111) invalide les données de consommation reçues. Celles-ci ne peuvent pas être attribuées audit compteur intelligent secondaire SSM 151a, 151b. Le système d'information IS 110 génère alors une alarme.

Ainsi, grâce aux enseignements ci-dessus, il est aisé d'améliorer (« upgrade » en anglais) les capacités d'un système de gestion automatisée adapté pour collecter des données de consommation d'un premier type de compteurs intelligents qui utilisent un protocole de communication (ici, le protocole de communication P2, tel que DLMS/COSEM), afin que ce système de gestion automatisée soit aussi adapté pour collecter des données de consommation d'un deuxième type de compteurs intelligents qui utilisent un autre protocole de communication (ici, le protocole de communication P1, tel que M-Bus ou wM-Bus). Le système d'information IS (et particulièrement le système de gestion de données de compteurs MDMS) doit alors être rendu compatible avec cet autre protocole de communication (P1), et l'utilisation du chiffrement asymétrique et de passerelles GW permet d'assurer la non-répudiation des données de consommation transmises par les compteurs intelligents du deuxième type. L'amélioration pour supporter le deuxième type de compteurs intelligent est transparente pour le réseau de collecte (ici le réseau de communication NET1 101), ainsi que pour le concentrateur de données DC, qui peuvent déjà être déployés sur le terrain.

## Revendications

1. Procédé de collecte de données de consommation par un système d'information (110) dans un système de gestion automatisée (100), le système de gestion automatisée (100) comportant un concentrateur de données (120) auquel le système d'information (110) délègue la collecte de données et un réseau de communication (101) via lequel le concentrateur de données (120) collecte des données de consommation formatées selon un protocole de communication P2 auprès de compteurs intelligents d'un premier type, dits compteurs intelligents primaires (150), le système de gestion automatisée (100) comportant en outre au moins une passerelle (140a, 140b) connectée au réseau de communication (101), chaque passerelle (140a, 140b) servant de relais pour collecter des données de consommation formatées selon un protocole de communication P1 auprès de compteurs intelligents d'un deuxième type, dits compteurs intelligents secondaires (151a, 151b), le procédé étant tel que :
- chaque compteur intelligent secondaire (151a, 151b) transmet ses données de consommation accompagnées d'une empreinte dérivée desdites données de consommation, dans des données métier formatées selon le protocole de communication P1 et signées en utilisant une clef privée de chiffrement asymétrique ;
- chaque passerelle (140a, 140b) relaie, au concentrateur de données via le réseau de communication, les données signées par un dit compteur intelligent secondaire (151a, 151b) en les encapsulant dans des données métier formatées selon le protocole de communication P2 ;
- le concentrateur de données (120) relaie au système d'information (110) les données métier formatées selon le protocole de communication P2 qui sont reçues via le réseau de communication (101) ;
et lorsque les données métier formatées selon le protocole de communication P2 incluent des données métier formatées selon le protocole de communication P1, le système d'information (110) :
- déchiffre les données métier formatées selon le protocole de communication P1 **en** utilisant une clef publique de chiffrement asymétrique correspondant au compteur intelligent secondaire (151a, 151b) duquel les données de consommation sont supposées être collectées,
- génère une empreinte de référence à partir des données de consommation reçues dans les données métier déchiffrées et d'informations connues du système d'information (100),
- compare l'empreinte de référence générée et l'empreinte reçue dans les données métier déchiffrées, et valide les données de consommation reçues dans les données métier déchiffrées lorsque l'empreinte de référence générée et l'empreinte reçue dans les données métier déchiffrées correspondent.

2. Procédé selon la revendication 1, dans lequel les compteurs intelligents primaires sont des compteurs intelligents électriques et les compteurs intelligents secondaires sont des compteurs intelligents de consommation de fluide.

3. Procédé selon la revendication 2, dans lequel le protocole de communication P1 est de type M-Bus ou wM-Bus.

4. Procédé selon l'une des revendications 2 et 3, dans lequel le protocole de communication P2 est de type DLMS/COSEM.

5. Procédé selon l'une quelconque des revendications 1 à 4, dans lequel l'empreinte dérivée desdites données de consommation est calculée en appliquant une fonction de hachage à un quadruplet comprenant un numéro de série dudit compteur, un code de redondance cyclique calculé à partir d'un logiciel de métrologie utilisé pour obtenir les données de consommation, un numéro de certificat certifiant que ledit compteur intelligent secondaire (151a, 151b) est autorisé à être utilisé dans le système de gestion automatisé (100), et les données de consommation elles-mêmes.

6. Procédé selon l'une quelconque des revendications 1 à 5, dans lequel les données métier selon le protocole P2 sont transportées via le réseau de communication (101) sous forme chiffrée en utilisant une clef de chiffrement symétrique dédiée aux communications entre la passerelle (140a, 140b) concernée et le concentrateur de données (120).

7. Procédé selon l'une quelconque des revendications 1 à 6, dans lequel les données métier selon le protocole P1 sont transportées depuis le compteur intelligent secondaire (151a, 151b) concerné jusqu'à la passerelle (140a, 140b) concernée sous forme chiffrée en utilisant une clef de chiffrement symétrique dédiée aux communications entre ledit compteur intelligent secondaire (151a, 151b) et la passerelle (140a, 140b) en question.

8. Système de gestion automatisée (100) configuré pour effectuer une collecte de données de consommation, le système de gestion automatisée (100) comportant un système d'information (110) et un concentrateur de données (120), le système d'information (110) étant configuré pour déléguer la collecte de données au concentrateur de données (120), le système de gestion automatisé (100) comportant en outre un réseau de communication (101) via lequel le concentrateur de données collecte (120) des données de consommation formatées selon un protocole de communication P2 auprès de compteurs intelligents d'un premier type, dits compteurs intelligents primaires (150), le système de gestion automatisée (100) comportant en outre au moins une passerelle (140a, 140b) connectée au réseau de communication (101), chaque passerelle (140a, 140b) servant de relais pour collecter des données de consommation formatées selon un protocole de communication P1 auprès de compteurs intelligents d'un deuxième type, dits compteurs intelligents secondaires (151a, 151b), le système de gestion automatisé (100) comportant de la circuiterie électronique configurée de telle sorte que :
- chaque compteur intelligent secondaire (151a, 151b) transmet ses données de consommation accompagnées d'une empreinte dérivée desdites données de consommation, dans des données métier formatées selon le protocole de communication P1 et signées en utilisant une clef privée de chiffrement asymétrique ;
- chaque passerelle (140a, 140b) relaie, au concentrateur de données (120) via le réseau de communication (101), les données signées par un dit compteur intelligent secondaire (151a, 151b) en les encapsulant dans des données métier formatées selon le protocole de communication P2 ;
- le concentrateur de données (120) relaie au système d'information les données métier formatées selon le protocole de communication P2 qui sont reçues via le réseau de communication (101) ;
et lorsque les données métier formatées selon le protocole de communication P2 incluent des données métier formatées selon le protocole de communication P1, le système d'information (110) :
- déchiffre les données métier formatées selon le protocole de communication P1 **en** utilisant une clef publique de chiffrement asymétrique correspondant au compteur intelligent secondaire (151a, 151b) duquel les données de consommation sont supposées être collectées,
- génère une empreinte de référence à partir des données de consommation reçues dans les données métier déchiffrées et d'informations connues du système d'information,
- compare l'empreinte de référence générée et l'empreinte reçue dans les données métier déchiffrées, et valide les données de consommation reçues dans les données métier déchiffrées lorsque l'empreinte de référence générée et l'empreinte reçue dans les données métier déchiffrées correspondent.

## Patentansprüche

1. Verfahren zur Sammlung von Verbrauchsdaten durch ein Informationssystem (110) in einem System (100) zur automatisierten Verwaltung, wobei das System (100) zur automatisierten Verwaltung einen Datenkonzentrator (120), an den das Informationssystem (110) die Sammlung von Daten delegiert, und ein Kommunikationsnetz (101), über das der Datenkonzentrator (120) Verbrauchsdaten, die gemäß einem Kommunikationsprotokoll P2 formatiert sind, von intelligenten Zählern eines ersten Typs, als primäre intelligente Zähler (150) bezeichnet, sammelt, umfasst, wobei das System (100) zur automatisierten Verwaltung ferner mindestens ein Gateway (140a, 140b) umfasst, das mit dem Kommunikationsnetz (101) verbunden ist, wobei jedes Gateway (140a, 140b) als Weiterleitungspunkt dient, um Verbrauchsdaten, die gemäß einem Kommunikationsprotokoll P1 formatiert sind, von intelligenten Zählern eines zweiten Typs, als sekundäre intelligente Zähler (151a, 151b) bezeichnet, zu sammeln, wobei das Verfahren derart ist, dass:
- jeder sekundäre intelligente Zähler (151a, 151b) seine Verbrauchdaten zusammen mit einem aus den Verbrauchsdaten abgeleiteten Fingerabdruck in Geschäftsdaten überträgt, die gemäß dem Kommunikationsprotokoll P1 formatiert und unter Verwendung eines privaten Schlüssels zur asymmetrischen Verschlüsselung signiert sind;
- jedes Gateway (140a, 140b) die durch einen solchen sekundären intelligenten Zähler (151a, 151b) signierten Daten über das Kommunikationsnetz an den Datenkonzentrator weiterleitet, indem es sie in Geschäftsdaten, die gemäß dem Kommunikationsprotokoll P2 formatiert sind, verkapselt;
- der Datenkonzentrator (120) die gemäß dem Kommunikationsprotokoll P2 formatierten Geschäftsdaten an das Informationssystem (110) weiterleitet, die über das Kommunikationsnetz (101) empfangen werden;
und wenn die gemäß dem Kommunikationsprotokoll P2 formatierten Geschäftsdaten Geschäftsdaten enthalten, die gemäß dem Kommunikationsprotokoll P1 formatiert sind, das Informationssystem (110):
- die gemäß dem Kommunikationsprotokoll P1 formatierten Geschäftsdaten unter Verwendung eines öffentlichen Schlüssels zur asymmetrischen Verschlüsselung entschlüsselt, welcher dem sekundären intelligenten Zähler (151a, 151b) entspricht, von dem die Verbrauchsdaten gesammelt worden sein sollen,
- anhand der in den entschlüsselten Geschäftsdaten empfangenen Verbrauchsdaten und anhand von Informationen, die dem Informationssystem (100) bekannt sind, einen Referenzfingerabdruck erzeugt,
- den erzeugten Referenzfingerabdruck und den in den entschlüsselten Geschäftsdaten empfangenen Fingerabdruck vergleicht und die in den entschlüsselten Geschäftsdaten empfangenen Verbrauchsdaten validiert, wenn der erzeugte Referenzfingerabdruck und der in den entschlüsselten Geschäftsdaten empfangene Fingerabdruck übereinstimmen.

2. Verfahren nach Anspruch 1, wobei die primären intelligenten Zähler intelligente Stromzähler sind und die sekundären intelligenten Zähler intelligente Fluidverbrauchszähler sind.

3. Verfahren nach Anspruch 2, wobei das Kommunikationsprotokoll P1 vom Typ M-Bus oder wM-Bus ist.

4. Verfahren nach einem der Ansprüche 2 und 3, wobei das Kommunikationsprotokoll P2 vom Typ DLMS/COSEM ist.

5. Verfahren nach einem der Ansprüche 1 bis 4, wobei der aus den Verbrauchsdaten abgeleitete Fingerabdruck berechnet wird, indem eine Hash-Funktion auf ein Quadrupel angewendet wird, das Folgendes beinhaltet: eine Seriennummer des Zählers, einen zyklischen Redundanzcode, der anhand einer Messsoftware, die zum Erhalten der Verbrauchsdaten verwendet wird, berechnet wird, eine Zertifikatsnummer, die zertifiziert, dass der sekundäre intelligente Zähler (151a, 151b) zur Verwendung in dem System (100) zur automatisierten Verwaltung zugelassen ist, und die Verbrauchsdaten selber.

6. Verfahren nach einem der Ansprüche 1 bis 5, wobei die Geschäftsdaten gemäß dem Protokoll P2 in verschlüsselter Form unter Verwendung eines Schlüssels zur symmetrischen Verschlüsselung, der für Kommunikationen zwischen dem betroffenen Gateway (140a, 140b) und dem Datenkonzentrator (120) bestimmt ist, über das Kommunikationsnetz (101) transportiert werden.

7. Verfahren nach einem der Ansprüche 1 bis 6, wobei die Geschäftsdaten gemäß dem Protokoll P1 in verschlüsselter Form unter Verwendung eines Schlüssels zur symmetrischen Verschlüsselung, der für Kommunikationen zwischen dem sekundären intelligenten Zähler (151a, 151b) und dem jeweiligen Gateway (140a, 140b) bestimmt ist, von dem betroffenen sekundären intelligenten Zähler (151a, 151b) zu dem betroffenen Gateway (140a, 140b) transportiert werden.

8. System (100) zur automatisierten Verwaltung, das dazu konfiguriert ist, eine Sammlung von Verbrauchsdaten durchzuführen, wobei das System (100) zur automatisierten Verwaltung ein Informationssystem (110) und einen Datenkonzentrator (120) umfasst, wobei das Informationssystem (110) dazu konfiguriert ist, die Sammlung von Daten an den Datenkonzentrator (120) zu delegieren, wobei das System (100) zur automatisierten Verwaltung ferner ein Kommunikationsnetz (101) umfasst, über das der Datenkonzentrator (120) Verbrauchsdaten, die gemäß einem Kommunikationsprotokoll P2 formatiert sind, von intelligenten Zählern eines ersten Typs, als primäre intelligente Zähler (150) bezeichnet, sammelt, wobei das System (100) zur automatisierten Verwaltung ferner mindestens ein Gateway (140a, 140b) umfasst, das mit dem Kommunikationsnetz (101) verbunden ist, wobei jedes Gateway (140a, 140b) als Weiterleitungspunkt dient, um Verbrauchsdaten, die gemäß einem Kommunikationsprotokoll P1 formatiert sind, von intelligenten Zählern eines zweiten Typs, als sekundäre intelligente Zähler (151a, 151b) bezeichnet, zu sammeln, wobei das System (100) zur automatisierten Verwaltung elektronische Schaltkreise umfasst, die derart konfiguriert sind, dass:
- jeder sekundäre intelligente Zähler (151a, 151b) seine Verbrauchdaten zusammen mit einem aus den Verbrauchsdaten abgeleiteten Fingerabdruck in Geschäftsdaten überträgt, die gemäß dem Kommunikationsprotokoll P1 formatiert und unter Verwendung eines privaten Schlüssels zur asymmetrischen Verschlüsselung signiert sind;
- jedes Gateway (140a, 140b) die durch einen solchen sekundären intelligenten Zähler (151a, 151b) signierten Daten über das Kommunikationsnetz (101) an den Datenkonzentrator (120) weiterleitet, indem es sie in Geschäftsdaten, die gemäß dem Kommunikationsprotokoll P2 formatiert sind, verkapselt;
- der Datenkonzentrator (120) die gemäß dem Kommunikationsprotokoll P2 formatierten Geschäftsdaten an das Informationssystem weiterleitet, die über das Kommunikationsnetz (101) empfangen werden;
und wenn die gemäß dem Kommunikationsprotokoll P2 formatierten Geschäftsdaten Geschäftsdaten enthalten, die gemäß dem Kommunikationsprotokoll P1 formatiert sind, das Informationssystem (110):
- die gemäß dem Kommunikationsprotokoll P1 formatierten Geschäftsdaten unter Verwendung eines öffentlichen Schlüssels zur asymmetrischen Verschlüsselung entschlüsselt, welcher dem sekundären intelligenten Zähler (151a, 151b) entspricht, von dem die Verbrauchsdaten gesammelt worden sein sollen,
- anhand der in den entschlüsselten Geschäftsdaten empfangenen Verbrauchsdaten und anhand von Informationen, die dem Informationssystem bekannt sind, einen Referenzfingerabdruck erzeugt,
- den erzeugten Referenzfingerabdruck und den in den entschlüsselten Geschäftsdaten empfangenen Fingerabdruck vergleicht und die in den entschlüsselten Geschäftsdaten empfangenen Verbrauchsdaten validiert, wenn der erzeugte Referenzfingerabdruck und der in den entschlüsselten Geschäftsdaten empfangene Fingerabdruck übereinstimmen.

## Claims

1. Method for collecting consumption data by an information system (110) in an automated management system (100), the automated management system (100) comprising a data concentrator (120) to which the information system (110) delegates the collection of data and a communication network (101) via which the data concentrator (120) collects consumption data formatted in accordance with a communication protocol P2 from smart meters of a first type, referred to as primary smart meters (150), the automated management system (100) furthermore comprising at least one gateway (140a, 140b) connected to the communication network (101), each gateway (140a, 140b) serving as a relay for collecting consumption data formatted in accordance with a communication protocol P1 from smart meters of a second type, referred to as secondary smart meters (151a, 151b), the method being such that:
- each secondary smart meter (151a, 151b) transmits its consumption data accompanied by a hashcode derived from said consumption data, in business data formatted in accordance with the communication protocol P1 and signed using a private asymmetric encryption key;
- each gateway (140a, 140b) relays, to the data concentrator via the communication network, the data signed by a said secondary smart meter (151a, 151b) while encapsulating them in business data formatted in accordance with the communication protocol P2;
- the data concentrator (120) relays to the information system (110) the business data formatted in accordance with the communication protocol P2 that are received via the communication network (101);
and, when the business data formatted in accordance with the communication protocol P2 include business data formatted in accordance with the communication protocol P1, the information system (110):
- decrypts the business data formatted in accordance with the communication protocol P1 using a public asymmetric encryption key corresponding to the secondary smart meter (151a, 151b) from which the consumption data are supposed to be collected,
- generates a reference hashcode from the consumption data received in the decrypted business data and from information known to the information system (100),
- compares the reference hashcode generated and the hashcode received in the decrypted business data, and validates the consumption data received in the decrypted business data when the reference hashcode generated and the hashcode received in the decrypted business data match.

2. Method according to claim 1, wherein the primary smart meters are smart electricity meters and the secondary smart meters are smart meters for the consumption of fluid.

3. Method according to claim 2, wherein the communication protocol P1 is of the M-Bus or wM-Bus type.

4. Method according to one of claims 2 and 3, wherein the communication protocol P2 is of the DLMS/COSEM type.

5. Method according to any one of claims 1 to 4, wherein the hashcode derived from said consumption data is calculated by applying a hash function to a quadruplet comprising a serial number of said meter, a cyclic redundancy code calculated from metrology software used for obtaining the consumption data, a certificate number certifying that said secondary smart meter (151a, 151b) is enabled to be used in the automated management system (100), and the consumption data themselves.

6. Method according to any one of claims 1 to 5, wherein the business data in accordance with the protocol P2 are transported via the communication network (101) in encrypted form using a symmetric encryption key dedicated to the communications between the gateway (140a, 140b) concerned and the data concentrator (120).

7. Method according to any one of claims 1 to 6, wherein the business data in accordance with the protocol P1 are transported from the secondary smart meter (151a, 151b) concerned to the gateway (140a, 140b) concerned in encrypted form using a symmetric encryption key dedicated to the communications between said secondary smart meter (151a, 151b) and the gateway (140a, 140b) in question.

8. Automated management system (100) configured to collect consumption data, the automated management system (100) comprising an information system (110) and a data concentrator (120), the information system (110) being configured to delegate the collection of data to the data concentrator (120), the automated management system (100) furthermore comprising a communication network (101) via which the data concentrator (120) collects consumption data formatted in accordance with a communication protocol P2 from smart meters of a first type, referred to as primary smart meters (150), the automated management system (100) furthermore comprising at least one gateway (140a, 140b) connected to the communication network (101), each gateway (140a, 140b) serving as a relay for collecting consumption data formatted in accordance with a communication protocol P1 from smart meters of a second type, referred to as secondary smart meters (151a, 151b), the automated management system (100) comprising electronic circuitry configured so that:
- each secondary smart meter (151a, 151b) transmits its consumption data accompanied by a hashcode derived from said consumption data, in business data formatted in accordance with the communication protocol P1 and signed using a private asymmetric encryption key;
- each gateway (140a, 140b) relays, to the data concentrator (120) via the communication network (101), the data signed by a said secondary smart meter (151a, 151b) while encapsulating them in business data formatted in accordance with the communication protocol P2;
- the data concentrator (120) relays to the information system the business data formatted in accordance with the communication protocol P2 that are received via the communication network (101);
and, when the business data formatted in accordance with the communication protocol P2 include business data formatted in accordance with the communication protocol P1, the information system (110):
- decrypts the business data formatted in accordance with the communication protocol P1 using a public asymmetric encryption key corresponding to the secondary smart meter (151a, 151b) from which the consumption data are supposed to be collected,
- generates a reference hashcode from the consumption data received in the decrypted business data and from information known to the information system,
- compares the reference hashcode generated and the hashcode received in the decrypted business data, and validates the consumption data received in the decrypted business data when the reference hashcode generated and the hashcode received in the decrypted business data match.
